# EUROPÄISCHE PATENTSCHRIFT

(11) **EP 1 561 016 B1**
(45) Veröffentlichungstag und Bekanntmachung des Hinweises auf die Patenterteilung: **12.04.2006**
(21) Anmeldenummer: 03779669.5
(22) Anmeldetag: 27.10.2003
(51) Int. Cl.: F01N 3/20, B01D 53/94

(54) **VORRICHTUNG ZUR NACHBEHANDLUNG DES ABGASES EINER BRENNKRAFTMASCHINE**
DEVICE FOR THE SECONDARY TREATMENT OF THE EXHAUST GAS OF AN INTERNAL COMBUSTION ENGINE
DISPOSITIF DE RETRAITEMENT DES GAZ D'ECHAPPEMENT D'UN MOTEUR A COMBUSTION INTERNE

(30) Priorität: 06.11.2002 DE 10251588
(43) Veröffentlichungstag der Anmeldung: 10.08.2005
(73) Patentinhaber: ROBERT BOSCH GMBH, 70442 Stuttgart (DE)
(72) Erfinder: SCHALLER, Johannes, 71229 Leonberg (DE); BUERGLIN, Markus, 71254 Ditzingen (DE); ULLMANN, Ilona, 71254 Ditzingen (DE); BIEDER, Gudrun, 72770 Denkendorf (DE)
(86) Internationale Anmeldenummer: PCT/DE2003/003562
(87) Internationale Veröffentlichungsnummer: WO 2004/042208

(56) Entgegenhaltungen:
- WO-A-00/30733
- WO-A-02/057603
- DE-A- 4 432 577
- DE-A- 19 935 920
- US-B1- 6 442 932

## Beschreibung

### Stand der Technik

Die Erfindung geht aus von einem Verfahren bzw. einer Vorrichtung zur Nachbehandlung des Abgases einer Brennkraftmaschine nach der Gattung der unabhängigen Ansprüche. Aus der DE 199 35 920 ist bereits ein derartiges Verfahren bzw. eine derartige Vorrichtung bekannt, bei der zur Vermeidung des Gefrierens einer Harnstoff-Wasser-Lösung bei -11°C Heizrohre im Reduktionsmittelvorratsbehälter vorgesehen sind, so dass bei Reduktionsmitteltemperaturen unterhalb von 20°C eine Heizung des Reduktionsmittelvorratsbehälters erfolgen kann.

### Vorteile der Erfindung

Das erfindungsgemäße Verfahren bzw. die erfindungsgemäße Vorrichtung mit den kennzeichnenden Merkmalen der unabhängigen Ansprüche haben dem gegenüber den Vorteil, unter gezielter Ausnutzung einer Umwandlungsreaktion, insbesondere einer Zersetzungsreaktion, des Hilfsmittels eine Gefrierpunktabsenkung der Flüssigkeit zu erzielen, ohne im zeitlichen Mittel eine nennenswerte Temperaturerhöhung des Flüssigkeitssystems in Kauf nehmen zu müssen. Es muss bei tiefen Außentemperaturen nicht mehr ständig nachgeheizt werden, da nach einer gezielten chemischen Umsetzung auch bei tiefen Temperaturen keine Eisbildung mehr stattfindet und die Heizung nicht in Betrieb genommen werden muss, solange die Konzentration des aus der Umwandlungsreaktion entstehenden Stoffs in der Flüssigkeit hinreichend groß ist.

Durch die in den abhängigen Ansprüchen aufgeführten Maßnahmen sind vorteilhafte Weiterbildungen und Verbesserungen der in den unabhängigen Ansprüchen angegebenen Verfahren bzw. Vorrichtungen möglich.

Besonders vorteilhaft ist es, die Anregung in einem Teilbereich des im Tank bzw. in Leitungen enthaltenen Flüssigkeitsvolumens durchzuführen, so dass eine effektive Anreicherung der Flüssigkeit mit dem Stoff erzielt wird, ohne die Durchschnittstemperatur der Flüssigkeit nennenswert zu erhöhen.

In einfacher Weise kann vorgesehen sein, die gezielte Zersetzung von Harnstoff zu Ammoniak auszunutzen, um trotz niedriger Außentemperaturen und trotz nur unwesentlicher Temperaturerhöhung der Flüssigkeit im zeitlichen und räumlichen Mittel die Gefahr eines Eingefrierens und damit einhergehend die Gefahr einer Beschädigung von Leitungen und/oder von weiteren Systemkomponenten zu unterbinden.

Weitere Vorteile ergeben sich aus weiteren in den abhängigen Ansprüchen und in der Beschreibung genannten Merkmalen.

### Zeichnung

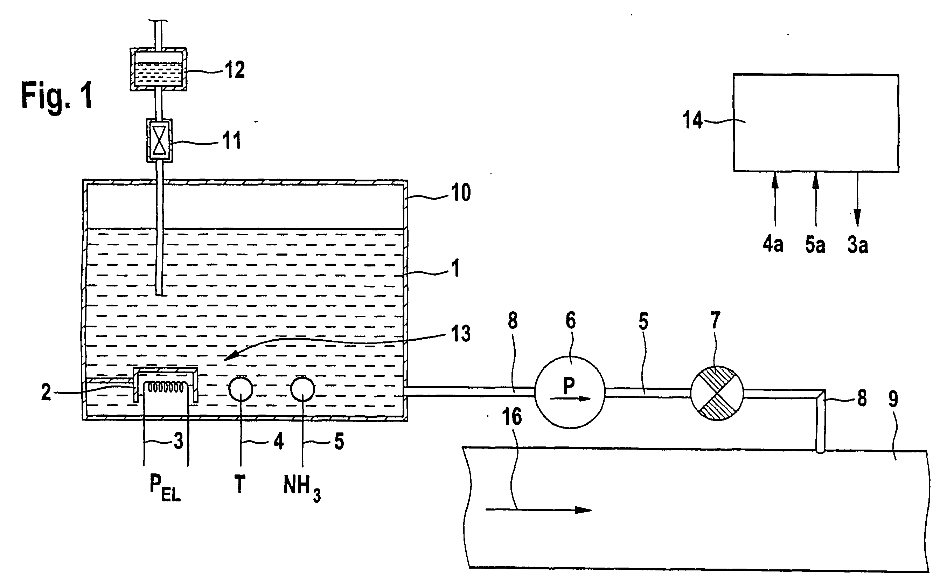

Ausführungsbeispiele der Erfindung sind in der Zeichnung dargestellt und in der nachfolgenden Beschreibung näher erläutert. Die Figur 1 zeigt eine Anordnung zur selektiven katalytischen Reduktion von Stickoxiden im Abgas einer Brennkraftmaschine.

### Beschreibung der Ausführungsbeispiele

In der einzigen Figur 1 stellt die Abgasleitung 9 die Abgasleitung einer Brennkraftmaschine, insbesondere einer Dieselbrennkraftmaschine eines Kraftfahrzeugs, dar. Das Abgas 16 strömt von der Brennkraftmaschine her kommend durch die Abgasleitung 9, passiert eine mit der Abgasleitung 9 verbundene Hamstoff-Wasser-Lösungs-Leitung (HWL-Leitung) 8 und erreicht schließlich einen nicht näher dargestellten Katalysator zur selektiven katalytischen Reduktion von im Abgas enthaltenen Stickoxiden. Hinter dem SCR-Katalysator ("SCR" = "selective catalytic reduction") strömt das Abgas über weitere nicht näher dargestellte Einrichtungen wie beispielsweise weitere Katalysatoreinrichtungen und/oder einen Schalldämpfer ins Freie. Die HWL-Leitung 8 ist an dem in die Abgasleitung mündenden Bereich gegenüberliegenden Ende mit einem Hamstoff-Wasser-Lösungs-Tank 10 verbunden. Zwischen dem Tank 10 und der Abgasleitung 9 ist in der Leitung 8 eine Pumpe 6 sowie zwischen der Pumpe 6 und der Abgasleitung 9 ein getaktet ansteuerbares Dosierventil 7 angeordnet. Im Tank 10 befindet sich eine Harnstoff-Wasser-Lösung (HWL) mit einem Gewichtsanteil von beispielsweise 32,5 % Harnstoff. In einem Teilvolumen 13 des Tanks 10, das im vorliegenden Ausführungsbeispiel im unteren Bereich des Tanks angesiedelt ist, befindet sich eine elektrische Heizung 3; die Zufuhr elektrischer Leistung zur Heizung der HWL in dem Teilvolumen ist schematisch mit den Buchstaben P_{EL} gekennzeichnet. Die als elektrische Heizspirale ausgeführte Heizung 3 ist nach oben hin zur Oberfläche der Harnstoff-Wasser-Lösung im Tank mit einem Abgrenzungselement 2, das am Seitenbereich des Tanks befestigt ist, begrenzt. Diese Begrenzung dient zur Abgrenzung des Bereichs, in dem eine wesentliche Beheizung bzw. Temperaturerhöhung der Flüssigkeit im Tank erfolgen kann. Lateral zum Abgrenzungselement und diesem benachbart sind sowohl ein Temperatursensor 4 als auch ein Ammoniaksensor 5 angeordnet, um in dem beheizbaren Teilvolumen sowohl die Temperatur als auch die Ammoniakkonzentration zu bestimmen. Oberhalb des Flüssigkeitspegels der Harnstoff-Wasser-Lösung ist der mit einer nicht näher dargestellten Verschlusseinrichtung verschließbare Tank 10 mit einem Überdruckventil 11 ausgerüstet, über das überschüssiger Gasdruck über eine nachgeordnete Waschflasche 12 entweichen kann. Desweiteren ist ein elektronisches Steuergerät 14 vorgesehen, das unter anderem die an sich bekannten Funktionen der Dosierung der Harnstoff-Wasser-Lösung in den Abgastrakt in Abhängigkeit von Motor bzw. Abgasparametern, die in nicht näher dargestellter Weise dem Steuergerät nach der Messung am Motor bzw. im Abgastrakt zugeführt werden, berechnet. Darüber hinaus ist dieses Steuergerät 14 zur Auswertung eines Temperatursignals 4a mit dem Temperatursensor 4 und zur Auswertung eines Ammoniakkonzentrationssignals 5a mit dem Ammoniaksensor 5 verbunden. Über eine Steuersignalleitung 3a kann beispielsweise eine nicht näher dargestellte Leistungstransistorschaltung angesteuert werden zur Regelung der elektrischen Heizleistung der elektrischen Heizung 3.

Die Pumpe bzw. das Dosierventil 7 werden über nicht näher dargestellte Ansteuerleitungen, die mit dem Steuergerät 14 verbunden sind, angesteuert, um in an sich bekannter Weise dem Abgas 16 in dosierter Form eine Harnstoff-Wasser-Lösung zuzuführen, um im nachfolgenden nicht näher dargestellten Entstickungskatalysator eine Reduktion von im Abgas enthaltenen Stickoxiden nach dem Verfahren der selektiven katalytischen Reduktion zu erzielen. Hierbei wird im Abgastrakt aus der dem Abgastrakt zugeführten Harnstoff-Wasser-Lösung Ammoniak gewonnen, das an dem SCR-Katalysator mit den Stickoxiden selektiv zu Stickstoff und Wasser reagiert. Zusätzlich zur vollständigen Umwandlung von Harnstoff-Wasser-Lösung in Ammoniak im Bereich des Abgastraktes ist erfindungsgemäß vorgesehen, in einem Teilbereich des Harnstoff-Wasser-Lösungs-Systems aus Tank 1, Leitung 8, Pumpe 6 und Dosierventil 7 eine zeitweise begrenzte und teilweise Zersetzungsreaktion von Harnstoff zu Ammoniak anzuregen, indem im Teilvolumen 13 des Tanks 10 die Harnstoff-Wasser-Lösung auf eine Zersetzungstemperatur in einem Bereich über 60°C erhitzt wird. Die zeitliche Ausdehnung der Inbetriebnahme der elektrischen Heizung und die Heizungsleistung wird mittels des Steuergeräts 14 in Abhängigkeit von dem im Teilvolumen 13 gemessenen Temperatur bzw. Ammoniakkonzentrationswerten gesteuert. Diese Wärmezufuhr erfolgt bei Erreichung bzw. Unterschreiten eines kritischen Temperaturwerts, der in einem Bereich von 0 Grad Celsius bis -11 Grad Celsius, vorzugsweise in einem Bereich von - 5 Grad Celsius bis - 10 Grad Celsius, liegt. Hierbei wird darauf geachtet, eine hinreichend hohe Ammoniakkonzentration im gesamten Flüssigkeitsvolumen des Harnstoff-Wasser-Lösungs-Systems zu gewährleisten, um eine hinreichend hohe Gefrierpunktabsenkung zu erzielen, so dass nachfolgend eine erneute Erhitzung unterbleiben kann, auch wenn die Temperatur wieder unter den kritischen Wert sinkt. Wenn die Ammoniakkonzentration allerdings so weit abgenommen hat, dass eine hinreichende Gefrierpunktabsenkung nicht mehr gewährleistet ist, muss bei Unterschreiten des kritischen Temperaturwerts wieder beheizt werden. Die Ammoniakkonzentration bewegt sich dabei üblicherweise in einem Bereich zwischen 7 und 20 Prozent, so dass eine Gefrierpunktabsenkung in einem Bereich von 10K bis 50K resultiert. Insbesondere ist es vorteilhaft, einen Wert von ca. 7 bis 15 Volumenprozent Ammoniak in der Harnstoff-Wasser-Lösung einzustellen, um den Gefrierpunkt der Harnstoff-Wasser-Lösung von -11°C auf-20°C bis -30°C abzusenken. Die Temperatur der Harnstoff-Wasser-Lösung wird im zeitlichen und räumlichen Mittel um 5 K bis 50 K erhöht, und der Druck im Tank steigt nur geringfügig an. Der gegebenenfalls entstehende Überdruck in Folge des aus der Harnstoff-Wasser-Lösung entweichenden Ammoniaks wird durch das Überdruckventil 11 abgeblasen. Bevor der Überdruck ins Freie gelangt, passiert das Gas die Waschflasche 12, durch welche das im Gas enthaltene Ammoniak aus dem entweichenden Gas entfernt werden kann, um die Gefahr einer Belästigung der Umwelt durch austretendes Ammoniak zu minimieren. In 1 1 Wasser können bis zu 700 1 Ammoniak gelöst werden. Im vorliegenden Ausführungsbeispiel beträgt das Tankvolumen 601, so dass das 10-fache des Tankvolumens an reinem Ammoniak bei Umgebungsdruck in 11 Wasser, das in der Waschflasche 12 enthalten ist, gelöst werden kann. Der Zustand des Wassers in der Waschflasche wird entweder durch nicht näher dargestellte Vorrichtungen überwacht oder in regelmäßigen Intervallen (beispielsweise nach einer festgelegten Anzahl von Tankfüllungen) ausgetauscht.

In einer alternativen Ausführungsform erfolgt das Entweichen von Überdruck aus dem Tank 10 nicht in die Umgebungsluft, sondern in die Abgasleitung hinein, um noch eventuell die Waschflasche 12 passierendes Ammoniak im SCR-Katalysator unschädlich machen zu können und eine zusätzliche Sicherheit zur Vermeidung von Umweltbelästigungen zu gewährleisten. Das Verfahren der gezielten Zersetzung von Harnstoff zu Ammoniak im Bereich des HWL-Systems zur Gefrierpunktabsenkung kann in einer verbesserten Ausführungsform eine zusätzliche Messung der Außentemperatur vorsehen, um eine Gefrierpunktabsenkung nur dann zu aktivieren, wenn diese notwendig ist, also bei niedrigen Außentemperaturen, insbesondere bei Minusgraden. Die Erhitzung eines Teilbereichs des HWL-Volumens bzw. die Anregung einer Zersetzung von Harnstoff zu Ammoniak in einem Teilbereich des HWL-Systems kann auch in einem anderen Teil des Systems als im Tank erfolgen. Es ist auch möglich, bei der Verwendung eines mit Harnstoff-Wasser-Lösung gekühlten Einspritzventils als Dosierventil 7 den Kühtmittelstrom der Harnstoff-Wasser-Lösung so stark anzudrosseln, so dass die als Kühlmittel verwendete HWL-Lösung in der gewünschten Weise zur Anregung der Harnstoff-Zersetzung erhitzt wird. Der Ammoniaksensor kann hierbei beispielsweise im Tank verbleiben während der Temperatursensor im Kühlmittelstrom angeordnet ist. Diese nicht näher dargestellte Alternative, HWL-Lösung auch als Kühlmittel zur Kühlung des abgastraktnah angeordneten Dosierventils zu verwenden unter Vorsehung einer Drosselung des Kühlmittelstroms, kann dahingehend weiter verbessert werden, diese Drosselung regelbar, insbesondere regelbar in Abhängigkeit von gemessenen HWL-Temperaturwerten bzw. gemessenen Ammoniakkonzentrationswerten, einzustellen. Ferner kann in einer weiteren Ausführungsform das Überdruckventil 11 so ausgeführt sein, dass eine definierte Druckerhöhung im System eingestellt werden kann, wodurch eine Verschiebung des chemischen Gleichgewichts zwischen Harnstoff und Ammoniak im System weiter in Richtung des Gases Ammoniak hin erfolgt. Alternativ kann zur lokalen Erhitzung der HWL-Lösung im einem Teilbereich des Tanks 10 oder in einem Teilbereich der Abgasleitung 8 auch ein Standheizungssystem verwendet werden, um die Fahrzeugbatterie zu entlasten, insbesondere dann, wenn die Anregung der Zersetzungsreaktion auch bei längeren Stillstandszeiten, also bei Motorstillstand, erfolgen soll. Das Verfahren bzw. das System kann in weiteren alternativen Ausführungsformen so ausgelegt bzw. verbessert werden, dass aufgrund eines sich einstellenden Temperaturgradienten ein Stoffaustausch im System insbesondere zwischen dem erhitzten Teilbereich und dem restlichen Tankbereich gut erfolgen kann, um in relativ kurzen Zeitfenstern durch die lokale Wärmezufuhr insgesamt die gesamte Harnstoff-Wasser-Lösung behandeln zu können bzw. eine schnelle Verteilung des entstehenden Ammoniaks im gesamten System zu gewährleisten. Je besser das System zur Unterstützung einer solchen Konvektion ausgeführt ist, desto geringer ist der Energiebedarf, da sich das entstehende Ammoniak sofort im System verteilt und gelöst bleibt, ohne sofort aus der wässrigen Lösung zu entweichen und damit zur Gefrierpunktabsenkung nicht zur Verfügung zu stehen.

## Patentansprüche

1. Verfahren zur Nachbehandlung des Abgases einer Brennkraftmaschine, bei dem eine Flüssigkeit als Hilfsmittel zur Nachbehandlung verwendet wird, **dadurch gekennzeichnet, daß** zumindest zeitweise eine teilweise chemische Umwandlung des Hilfsmittels in einen den Gefrierpunkt der Flüssigkeit absenkenden Stoff angeregt wird, wenn die Temperatur der Flüssigkeit einen kritischen Wert unterschreitet.

2. Verfahren nach Anspruch 1, **dadurch gekennzeichnet, daß** die Umwandlung des Hilfsmittels erfolgt, bevor das Hilfsmittel in das Abgas eingeführt wird.

3. Verfahren nach Anspruch 1 oder 2, **dadurch gekennzeichnet, daß** die Flüssigkeit aus einem Tank entnommen und über Leitungen zum Abgas geführt wird, wobei die Anregung in einem Teilbereich des im Tank beziehungsweise in den Leitungen enthaltenen Flüssigkeitsvolumens derart erfolgt, daß sich eine ausreichende Menge des Stoffs im Flüssigkeitsvolumen verteilen kann, um eine gleichmäßige Gefrierpunktabsenkung zu erzielen.

4. Verfahren nach einem der vorhergehenden Ansprüche, **dadurch gekennzeichnet, daß** die Anregung durch Wärmezufuhr erfolgt.

5. Verfahren nach Anspruch 3 und 4, **dadurch gekennzeichnet, daß** in der Zeit, in der die Wärmezufuhr erfolgt, der Teilbereich der Flüssigkeit auf eine Temperatur über 60 Grad Celsius erhitzt wird.

6. Verfahren nach einem der Ansprüche 4 oder 5, **dadurch gekennzeichnet, daß** die Wärmezufuhr infolge einer räumlichen Verteilung im Laufe der Zeit nur zur einer geringfügigen Temperaturerhöhung des Flüssigkeitsvolumens führt.

7. Verfahren nach Anspruch 6, **dadurch gekennzeichnet, daß** die geringfügige Temperaturerhöhung im Bereich zwischen 5 Kelvin und 50 Kelvin liegt.

8. Verfahren nach einem der vorhergehenden Ansprüche, **dadurch gekennzeichnet, daß** der Gefrierpunkt um 10 bis 30 Kelvin abgesenkt wird.

9. Verfahren nach einem der vorhergehenden Ansprüche, **dadurch gekennzeichnet, daß** die Konzentration des Stoffs in der Flüssigkeit und/oder die Temperatur der Flüssigkeit gemessen wird und daß die Intensität beziehungsweise die Zeitdauer der Anregung in Abhängigkeit von der Konzentration des Stoffs und/oder der Temperatur eingestellt wird.

10. Verfahren nach Anspruch 9, **dadurch gekennzeichnet, daß** die Messung der Konzentration bzw. die Messung der Temperatur in dem Teilbereich erfolgt.

11. Verfahren nach einem der vorhergehenden Ansprüche, **dadurch gekennzeichnet, daß** der Stoff ein in der Flüssigkeit lösliches Gas ist.

12. Verfahren nach einem der vorhergehenden Ansprüche, **dadurch gekennzeichnet, daß** als Flüssigkeit eine Harnstoff-Wasser-Lösung verwendet wird und daß der Stoff Ammoniak ist.

13. Vorrichtung zur Nachbehandlung des Abgases einer Brennkraftmaschine, bei der eine Flüssigkeit (1) als Hilfsmittel zur Nachbehandlung verwendet wird, **dadurch gekennzeichnet, daß** Mittel (2, 3, 4, 5, 3a, 4a, 5a, 14) vorgesehen sind zur zumindest zeitweisen Anregung einer teilweisen chemischen Umwandlung des Hilfsmittels in einen den Gefrierpunkt der Flüssigkeit absenkenden Stoff, wobei die Mittel derart angeordnet beziehungsweise eingerichtet sind, daß die Anregung erfolgen kann, wenn die Temperatur der Flüssigkeit einen kritischen Wert unterschreitet.

## Claims

1. Method for the aftertreatment of the exhaust gas from an internal combustion engine, in which a liquid is used as an auxiliary agent for the aftertreatment, **characterized in that** at least from time to time a partial chemical conversion of the auxiliary agent into a substance which lowers the freezing point of the liquid is effected when the temperature of the liquid drops below a critical value.

2. Method according to Claim 1, **characterized in that** the conversion of the auxiliary agent takes place before the auxiliary agent is introduced into the exhaust gas.

3. Method according to Claim 1 or 2, **characterized in that** the liquid is removed from a tank and passed via lines to the exhaust gas, with the conversion being effected in a subregion of the volume of liquid contained in the tank and/or the lines, in such a manner that a sufficient quantity of the substance can be distributed within the volume of the liquid to produce a uniform lowering of the freezing point.

4. Method according to one of the preceding claims, **characterized in that** the conversion is effected by supplying heat.

5. Method according to Claims 3 and 4, **characterized in that** during the period of time in which the heat is being supplied, the subregion of the liquid is heated to a temperature of over 60° Celsius.

6. Method according to either of Claims 4 and 5, **characterized in that** the supply of heat, as a result of spatial distribution over the course of the time, leads to only a slight increase in the temperature of the volume of liquid.

7. Method according to Claim 6, **characterized in that** the slight increase in temperature is in the range between 5 Kelvin and 50 Kelvin.

8. Method according to one of the preceding claims, **characterized in that** the freezing point is lowered by from 10 to 30 Kelvin.

9. Method according to one of the preceding claims, **characterized in that** the concentration of the substance in the liquid and/or the temperature of the liquid is measured, and **in that** the intensity and/or duration of the conversion is set as a function of the concentration of the substance and/or the temperature.

10. Method according to Claim 9, **characterized in that** the measurement of the concentration and/or the measurement of the temperature takes place within the subregion.

11. Method according to one of the preceding claims, **characterized in that** the substance is a liquid-soluble gas.

12. Method according to one of the preceding claims, **characterized in that** the liquid used is a urea-water solution and **in that** the substance is ammonia.

13. Apparatus for the aftertreatment of the exhaust gas from an internal combustion engine, in which a liquid (1) is used as an auxiliary agent for the aftertreatment, **characterized in that** there are means (2, 3, 4, 5, 3a, 4a, 5a, 14) for at least from time to time effecting a partial chemical conversion of the auxiliary agent into a substance which lowers the freezing point of the liquid, the means being arranged and/or designed in such a manner that the conversion can take place when the temperature of the liquid drops below a critical value.

## Revendications

1. Procédé de post-traitement des gaz d'échappement d'un moteur à combustion interne, selon lequel on utilise un liquide comme adjuvant de post-traitement,
**caractérisé en ce qu'**
au moins temporairement, une transformation partiellement chimique de l'adjuvant en une substance abaissant le point de congélation du liquide est stimulée, lorsque la température du liquide passe en dessous d'une valeur critique.

2. Procédé selon la revendication 1,
**caractérisé en ce que**
la transformation de l'adjuvant s'effectue avant que l'adjuvant soit introduit dans les gaz d'échappement.

3. Procédé selon la revendication 1 ou 2,
**caractérisé en ce que**
le liquide est prélevé à partir d'un réservoir et acheminé vers les gaz d'échappement via des conduites, la stimulation s'effectuant dans une zone partielle du volume de liquide contenu dans le réservoir ou dans les conduites, de telle sorte qu'une quantité suffisante de la substance peut se répartir dans le volume de liquide afin d'obtenir un abaissement homogène du point de congélation.

4. Procédé selon l'une quelconque des revendications précédentes,
**caractérisé en ce que**
la stimulation s'effectue par apport de chaleur.

5. Procédé selon les revendications 3 et 4,
**caractérisé en ce que**
pendant la période dans laquelle s'effectue l'apport de chaleur, la zone partielle du liquide est chauffée à une température supérieure à 60 degrés Celsius.

6. Procédé selon l'une quelconque des revendications 4 ou 5,
**caractérisé en ce que**
l'apport de chaleur, en raison de la répartition spatiale au cours du temps, ne conduit qu'à une faible augmentation de température du volume de liquide.

7. Procédé selon la revendication 6,
**caractérisé en ce que**
la faible augmentation de température se situe dans une plage comprise entre 5 Kelvins et 50 Kelvins.

8. Procédé selon l'une quelconque des revendications précédentes,
**caractérisé en ce que**
le point de congélation est abaissé de 10 à 30 Kelvins.

9. Procédé selon l'une quelconque des revendications précédentes,
**caractérisé en ce que**
la concentration de la substance dans le liquide et/ou la température du liquide est mesurée, et l'intensité ou la durée de la stimulation est réglée en fonction de la concentration de la substance et/ou de la température.

10. Procédé selon la revendication 9,
**caractérisé en ce que**
la mesure de la concentration ou la mesure de la température s'effectue dans la zone partielle.

11. Procédé selon l'une quelconque des revendications précédentes,
**caractérisé en ce que**
la substance est un gaz soluble dans le liquide.

12. Procédé selon l'une quelconque des revendications précédentes,
**caractérisé en ce que**
comme liquide on utilise une solution urée-eau et la substance est de l'ammoniac.

13. Dispositif de post-traitement des gaz d'échappement d'un moteur à combustion interne, utilisant un liquide (1) comme adjuvant de post-traitement,
**caractérisé en ce que**
des moyens (2, 3, 4, 5, 3a, 4a, 5a, 14) sont prévus pour stimuler au moins temporairement une transformation partiellement chimique de l'adjuvant en une substance abaissant le point de congélation du liquide, les moyens étant disposés ou orientés de telle sorte que la stimulation peut s'effectuer lorsque la température du liquide passe en dessous d'une valeur critique.
